# EUROPEAN PATENT SPECIFICATION

(11) **EP 4 406 786 B1**
(45) Date of publication and mention of the grant of the patent: **10.12.2025**
(21) Application number: 23153749.9
(22) Date of filing: 27.01.2023
(51) Int. Cl.: B60R 19/18

(54) **STRUCTURAL PART FOR A TRUCK, COMPRISING A BEAM MADE OF FIBER-REINFORCED PLASTIC**
STRUKTURTEIL FÜR EINEN LASTKRAFTWAGEN MIT EINEM BALKEN AUS FASERVERSTÄRKTEM KUNSTSTOFF
PIÈCE DE STRUCTURE POUR CAMION, COMPRENANT UNE POUTRE EN PLASTIQUE RENFORCÉ PAR DES FIBRES

(43) Date of publication of application: 31.07.2024
(73) Proprietor: VOLVO TRUCK CORPORATION, 405 08 Göteborg (SE)
(72) Inventor: SANKAR, Giri, 69800 SAINT-PRIEST (FR); HAREL, Samarth Dattatraya, 591213 BANGALORE (IN)
(74) Representative: Lavoix

(56) References cited:
- EP-A2- 1 031 467
- WO-A1-2015/089185
- WO-A1-2020/011206
- DE-A1- 4 208 670
- US-A- 5 417 022

## Description

### Technical Field

This disclosure relates to a structural part for equipping an industrial vehicle, in particular a truck.

### Background Art

Some structural parts used on trucks may be beam shaped. For example, the grille of the truck may comprise a cover with an aesthetic role fixed to a beam with a load-bearing function. The beam of the grille is often made of steel, which provides high mechanical properties and moderate cost.

In order to decrease the overall weight of the vehicles, fiber-reinforced plastic materials have often been used for the manufacture of vehicle parts. For example, glass fiber reinforced polyamid have been used for a wide range of applications, in which a mix of molten plastic and reinforcing fibers is pressurized and injected into a mold providing the target shape of the part. Nevertheless, this material has proven to be difficult to process to fabricate structural components like beams. WO2020011206A1 discloses a structural member corresponding to the preamble of claim 1 comprising a section structure with two flanges with a web. Stiffeners are provided between the adjacently spaced webs. In particular, these injected plastic parts often suffer from various issues, like short fill or warpage. These issues often result in a high scrap rate which is not acceptable.

There is therefore a need for providing a solution to manufacture structural parts like beams from fiber-reinforced plastic materials.

### Summary

To this end, it is proposed a structural part for a truck, comprising:
a beam made of fiber-reinforced plastic, the beam having a I-shaped cross-section, the beam comprising a web extending from a first flange to a second flange, in which a cross-section of the web comprises :
   - a first portion with a first thickness,
   - a second portion with a second thickness, the second thickness being larger than the first thickness, and
   - a third portion with a third thickness, the third thickness being smaller than the second thickness,
and in which the second portion is located between the first portion and the third portion.

Compared with conventional I-shaped beams in which the thickness of the web in constant except in the region where the web joins the flanges, the proposed structural part comprises a web in which a portion is enlarged compared to the neighboring portions. This enlarged portion can act as a flow leader for the molten material when the structural part is molded. The flow of molten plastic is easier, and issues usually associated with high viscosity plastic material, like short fills, can be avoided. Structural parts made of plastic material reinforced by fibers can be manufactured.

The following features can optionally be implemented, separately or in combination one with the others:

According to an aspect of the structural part, a cross-section of the web extends along a main extension axis transverse to the first flange and to the second flange. A cross-section of the first flange comprises a first portion and a second portion extending symmetrically relatively to the main extension axis of the web, and
each portion of the first flange has a thickness decreasing continuously from the main extension axis of the web to a free end of each portion of the first flange.

In an embodiment of the structural part:
- the first portion of the first flange comprises a first side orientated away from the web and a second side orientated towards the web,
- the second portion of the first flange comprises a first side orientated away from the web and a second side orientated towards the web, and
the first side of the first portion of the first flange makes with the first side of the second portion of the first flange an angle comprised between 166° and 177°.

The decreasing thickness and relative orientation of the sides of the first portion of the flange provides a draft angle for the mold opening during the injection process for manufacturing the beam, the parting line between the elements of the mold corresponding to the main extension axis of a cross section of the web of the beam.

Similarly, the second side of the first portion of the first flange makes with the second side of the second portion of the first flange an angle comprised between 166° and 177°.

A cross-section of the second flange comprises a first portion and a second portion extending symmetrically relatively to the main extension axis of the web, and each portion has a thickness decreasing continuously from the main extension axis of the web to a free end of each portion of the second flange.

The first portion of the second flange comprises a first side orientated away from the web and a second side orientated towards the web.

The second portion of the second flange comprises a first side orientated away from the web and a second side orientated towards the web.

In an embodiment, the first side of the first portion of the second flange makes with the first side of the second portion of the second flange an angle comprised between 166° and 177°.

Similarly, the second side of the first portion of the second flange makes with the second side of the second portion of the second flange an angle comprised between 166° and 177°.

This range of angle provides a draft angle suitable for an easy opening of the mold when the beam is injected.

In an example of implementation, the thickness of the first portion of the web is identical to the thickness of the third portion of the web.

The web comprises two portions of constant thickness separated by an enlarged portion, the enlarged portion having a larger thickness than the two portions of constant thickness.

In an embodiment of the structural part, the web extends along a main extension axis transverse to the first flange and to the second flange, and the main extension axis of the web is an axis of symmetry of the cross section of the beam.

According to an embodiment, an axis passing through a centroid of the second portion and perpendicular to the main extension axis of a cross-section of the web is an axis of symmetry of the cross section of the beam.

The beam has the same mechanical properties when it used in a given orientation or turned by 180° relatively to this given orientation.

The main axis of the web is perpendicular to the axis of the first flange and to the axis of the second flange.

According to an embodiment, the second portion of the web has a constant thickness.

In an embodiment, starting from the first portion of the web and moving in direction of the third portion of the web, the second portion of the web comprises a first zone of continuously increasing thickness followed by a second zone of continuously decreasing thickness.

According to the invention, starting from the first portion of the web and moving in direction of the third portion of the web, the second portion of the web comprises successively a first concave section, a convex section and a second concave section.

This succession of curved portions provides a high concentration of reinforcing fibers in areas subjected to high stresses when mechanical loads are applied to the beam.

In an example of implementation of the structural part, the second portion of the web is closer to the first flange than to the second flange.

In a variant, the second portion of the web is closer to the second flange than to the first flange.

A ratio of the cross-section area of the second portion of the web over the total cross-section area of the web is comprised between 0,25 and 0,5.

A ratio of the extension length of the second portion of the web over the total extension length of the web is comprised between 0,2 and 0,35.

A ratio of the thickness of the second portion of the web over the thickness of the first portion of the web is comprised between 1,2 and 2,5.

The cross section of the beam is constant along the length of the beam.

The material of the beam comprises a mix of reinforcing glass fibers with thermoplastic material.

In an embodiment of the structural part, the material of the beam comprises a mix of reinforcing glass fibers with polyamide plastic material.

The polyamide material is for example PA6. (for "polycaprolactam")

This material combines good mechanical properties and reasonable cost.

The reinforcing fibers are for example glass fibers.

A weight ratio of reinforcing glass fibers is comprised between 15% and 40%.

This range of fibers concentration provides high mechanical properties.

The disclosure also refers to a method for manufacturing a structural part as described earlier, comprising the steps:
(i) supplying a two-part mold, comprising a set of injection points offset along a main extension axis of the beam,
   the injection points facing a first flange of the beam,
(ii) injecting a mix of molten plastic and reinforcing fibers so as to form the beam.

The molten plastic is injected in a direction parallel to the extension axis of a cross-section of the web of the beam.

This injection direction together with the shape of the enlarged portion of the web makes the manufacturing of structural parts possible.

The disclosure relates as well to a truck grille comprising:
- a structural part as described earlier,
- a cover attached to the structural part.

In an embodiment, the truck grille comprises:
- two support arms extending transversely to the beam,
and the support arms are configured to be pivotably fixed to a cabin of a truck.

The support arms are fixed to the beam.

The support arms are fixed to opposite axial ends of the beam.

The disclosure also refers to a truck comprising a truck grille as described above, in which the truck grille can be pivoted between :
- a first position in which the truck grille is flush with a front surface of a truck cabin,
- a second position in which the truck grille protrudes out of the front surface of the truck cabin, so that the grille forms a step member for climbing along the cabin of the truck.

The grille is rotated by 90° between the first position and the second position.

The flanges of the beam are horizontal when the grille is in the first position.

The web of the beam is horizontal when the grille is in the second position.

### Brief Description of Drawings

Other features, details and advantages will be shown in the following detailed description and on the figures, on which:
- Figure 1 is a schematic side view of a truck equipped with a structural part according to the disclosure,
- Figure 2 is a perspective view of a truck equipped with a structural part according to the disclosure,
- Figure 3 is a schematic side view of a structural part according to a first embodiment,

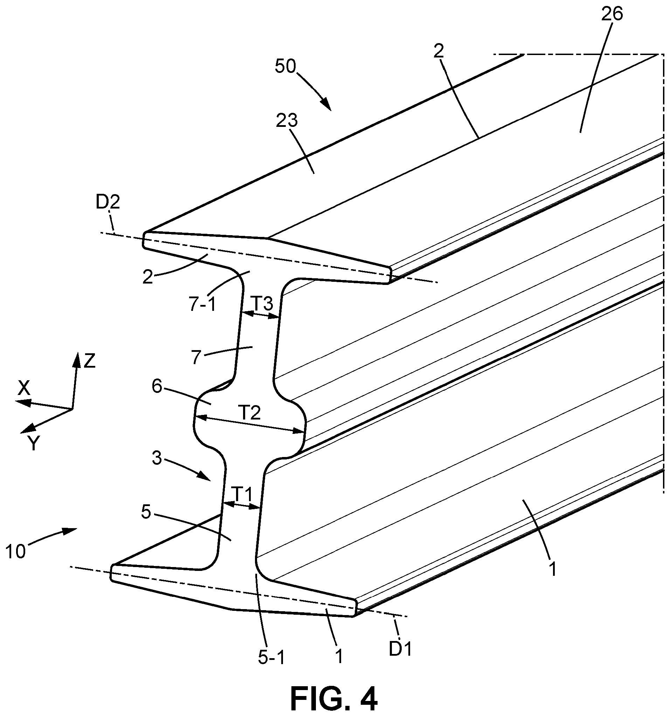

- Figure 4 is a perspective view of a structural part according to a second embodiment,
- Figure 5 is a side view of the structural part of figure 4,
- Figure 6 is a schematic side view of a structural part according to the second embodiment,
- Figure 7 is another perspective view of a structural part according to a second embodiment,
- Figure 8 is a schematic view illustrating steps of the manufacturing method of a structural part according to the disclosure
- Figure 9 a schematic view illustrating a variant of the method of figure 8.

### Description of Embodiments

In order to make the figures easier to read, the various elements are not necessarily represented to scale. In these figures, identical elements receive the same reference number. Certain elements or parameters can be indexed, that is to say designated for example by 'first element' or second element, or first parameter and second parameter, etc. The purpose of this indexing is to differentiate elements or parameters that are similar, but not identical. This indexing does not imply a priority of one element, or one parameter over another, and their names can be interchanged. When it is mentioned that a subsystem comprises a given element, the presence of other elements in this subsystem is not excluded.

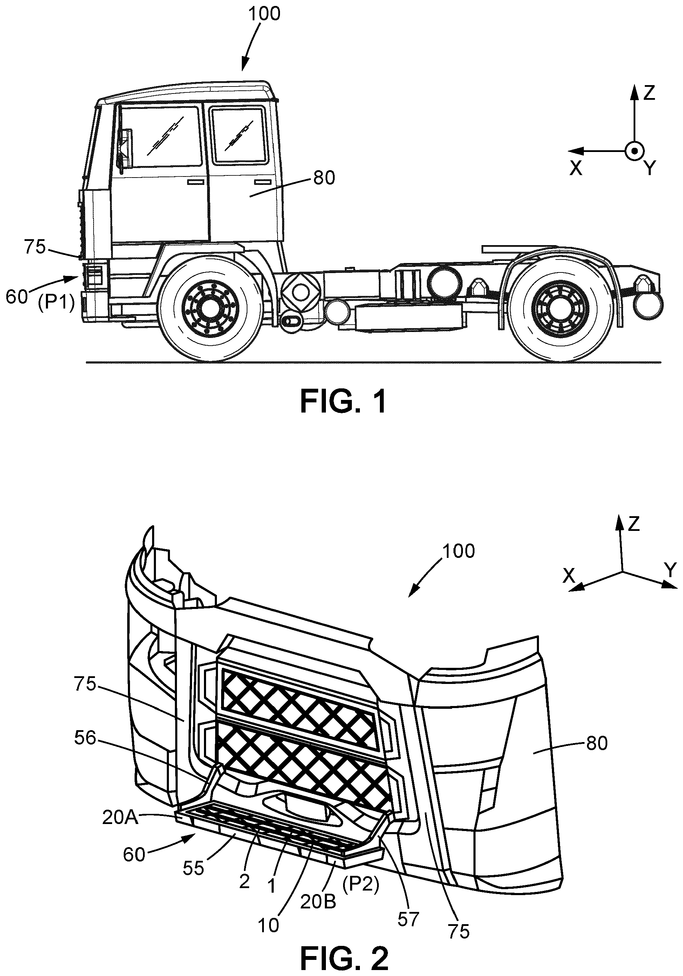

Figure 1 illustrates a truck 100. The truck 100 is here a cab-over truck, but the proposed solution is applicable to any kind of truck. It can also be applied to other large transport vehicles like buses.

The truck 100 comprises a cabin 80 ending by a front surface 75. The front surface 75 comprises a grille 60.

The truck 100 comprises a truck grille 60 which can be pivoted between:
- a first position P1 in which the truck grille 60 is flush with a front surface 75 of a truck cabin 80,
- a second position P2 in which the truck grille 60 protrudes out of the front surface 75 of the truck cabin 80, so that the grille 60 forms a step member for climbing along the cabin 80 of the truck 100.

On figure 1, the grille 60 is flush with the front surface 75 of the cabin 80. On figure 2, the grille 60 has been rotated and reached the second position P2. In this second position P2, the grille 60 can be used as a step member. A user can step over the grille 60 once it is in the second position P2, for example for cleaning the windshield or the upper part of the cabin 80.
The grille 60 is for example rotated by 90° between the first position P1 and the second position P2.

The truck grille 60 comprises:
- a structural part 50 that will be detailed below,
- a cover 55 attached to the structural part 50.
The structural part 50 comprises a beam 10. By definition, a structural part is a part with load bearing capacities of at least 1000 N.

More precisely, the truck grille 60 comprises two support arms 56, 57 extending transversely to the beam 10, and the support arms 56, 57 are configured to be pivotably fixed to the cabin 80 of the truck 100.

The support arms 56, 57 are fixed to the beam 10. The support arms 56, 57 are here fixed to opposite axial ends 20A, 20B of the beam 10, as indicated on figure 2. The fasteners of the support arms 56, 57 on the beam 10 are not represented on figure 2.

The cover 55 has an aesthetic role, and no structural role. The cover 55 can for example by clipped over the structural part 50.

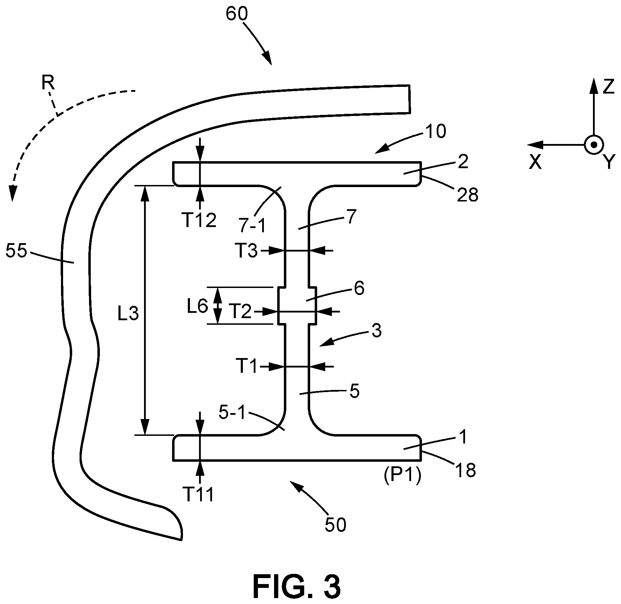

Figure 3 illustrates the truck grille 60 in the first position P1. A cross-section of the beam 10 has a I-shape. The cross-section of the beam 10 comprises two flanges 1, 2 connected by a web 3.
The flanges 1, 2 of the beam 10 are horizontal when the grille 60 is in the first position P1. The web 3 of the beam 10 is horizontal when the grille 60 is in the second position P2. The flanges 1, 2 are vertical when the grille 60 is in the second position P2, as it is the case on figure 2.
A user stepping over the grille 60 contacts the free ends 18, 28 of the flanges 1,2 when he steps on the step member formed by the grille 60.
On figure 3, the support arms have not been represented, for better visibility of the beam 10. The arrow designated by the sign R indicates the direction in which the grille 60 can pivot during the transition from the first position P1 to the second position P2.

The proposed structural part 50 for a truck 100 comprises:
a beam 10 made of fiber-reinforced plastic, the beam 10 having a I-shaped cross-section, the beam 10 comprising a web 3 extending from a first flange 1 to a second flange 2.
A cross-section of the web 3 comprises :
- a first portion 5 with a first thickness T1,
- a second portion 6 with a second thickness T2, the second thickness T2 being larger than the first thickness T1, and
- a third portion 7 with a third thickness T3, the third thickness T3 being smaller than the second thickness T2,
and second portion 6 is located between the first portion 5 and the third portion 7.

Compared with conventional I-shaped beams in which the thickness of the web 3 is constant except in the region where the web 3 joins the first 1 and second flange 2, the proposed structural part 50 comprises a web 3 in which a portion is enlarged compared to its neighboring portions. This enlarged portion can act as a flow leader for the molten material when the structural part 50 is molded. The flow of molten plastic is easier, and issues usually associated with high viscosity plastic material, like short fills, can be avoided. Thanks to this geometry, structural parts made of plastic material reinforced by fibers can be manufactured with high level of quality and low scrap rates.

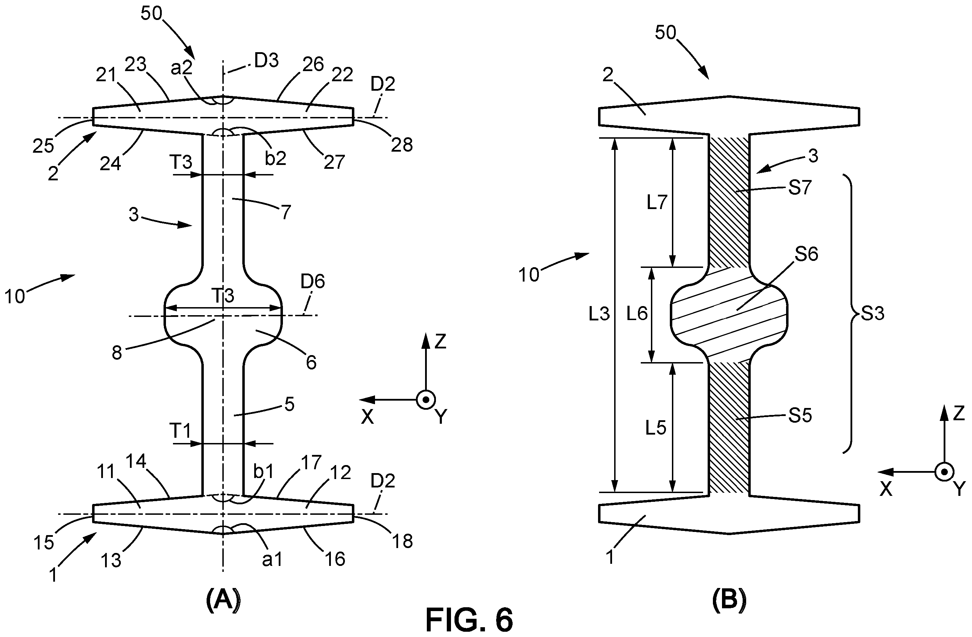

As illustrated on part A of figure 6, a cross-section of the web 3 extends along a main extension axis D3 transverse to the first flange 1 and to the second flange 2.
A cross-section of the first flange 1 comprises a first portion 11 and a second portion 12 extending symmetrically relatively to the main extension axis D3 of the web 3, and each portion 11,12 of the first flange 1 has a thickness decreasing continuously from the main extension axis D3 of the web 3 to a free end 15, 18 of each portion 11, 12 of the first flange 1.

A main extension axis for a given shape is the axis corresponding to the longest dimension of this shape. For example, for a rectangular shape the extension axis is parallel to the long sides of the rectangle.

The web 3 extends along a main extension axis D3. The thickness of the web 3 is the dimension measured transversely to the main extension axis D3 of the web 3. Similarly, the first thickness T1, second thickness T2, and third thickness T3 are all measured transversely to the main extension axis D3 of the web 3.
The second portion 6 is located between the first portion 5 and the third portion 7 along the main extension axis D3. In other words, the first portion 5, the second portion 6 and the third portion 7 are disposed successively in this order along the main extension axis D3 of the web 3.

In an embodiment of the structural part 20, illustrated on part A of figure 6:
- the first portion 11 of the first flange 1 comprises a first side 13 orientated away from the web 3 and a second side 14 orientated towards the web 3,
- the second portion 12 of the first flange 1 comprises a first side 16 orientated away from the web 3 and a second side 17 orientated towards the web 3, and
the first side 13 of the first portion 11 of the first flange 1 makes with the first side 16 of the second portion 12 of the first flange 1 an angle a1 comprised between 166° and 177°. Similarly, the second side 14 of the first portion 11 of the first flange 1 makes with the second side 17 of the second portion 12 of the first flange 1 an angle b1 comprised between 166° and 177°.

The decreasing thickness and the relative orientation of the sides 13, 14 of the first portion 11 of the first flange 11 provides a draft angle for a mold opening during the injection process for manufacturing the beam 10. The parting line between the elements of the mold corresponds in this case to the main extension axis D3 of a cross section of the web 3 of the beam 10.

In the same way, a cross-section of the second flange 2 comprises a first portion 21 and a second portion 22 extending symmetrically relatively to the main extension axis D3 of the web 3, and in which each portion 21, 22 has a thickness decreasing continuously from the main extension axis D3 of the web 3 to a free end 25, 28 of each portion 21, 22 of the second flange 2.

The first portion 21 of the second flange 2 comprises a first side 23 orientated away from the web 3 and a second side 24 orientated towards the web 3.
The second portion 22 of the second flange 2 comprises a first side 26 orientated away from the web 3 and a second side 27 orientated towards the web 3.

The first side 23 of the first portion 21 of the second flange 2 makes with the first side 26 of the second portion 22 of the second flange 2 an angle a2 comprised between 166° and 177°.
Similarly, the second side 24 of the first portion 21 of the second flange 2 makes with the second side 27 of the second portion 22 of the second flange 2 an angle b2 comprised between 166° and 177°.

This range of angle provides a draft angle suitable for an easy opening of the mold when the beam 10 is injected.

In the illustrated examples, the thickness T1 of the first portion 5 of the web 3 is identical to the thickness T3 of the third portion 7 of the web 3.

The web 3 comprises two portions 5,7 of constant thickness separated by an enlarged portion 6, the enlarged portion 6 having a larger thickness than the two portions 5,7 of constant thickness.

In the illustrated examples, the web 3 extends along a main extension axis D3 transverse to the first flange 1 and to the second flange 2, and the main extension axis D3 of the web 3 is an axis of symmetry of the cross section of the beam 10.

A I-shaped cross section comprises a first flange 1 with an elongated shape and a second flange 2 with an elongated shape, the two flanges 1,2 extending parallelly to each other, the two flanges 1,2 being connected by a web 3 extending transversely to the flanges 1,2, the cross section being symmetrical relatively to the extension axis D3 of the web 3.

A cross-section of the first flange 1 extends along a main axis D1. The thickness of the first flange 1 is the dimension measured transversely to the main extension axis D1 of the cross-section of the first flange 1. Similarly, a cross-section of the second flange 2 extends along a main axis D2. The thickness of the second flange 2 is the dimension measured transversely to the main extension axis D2 of the cross-section of the second flange 2. The main axis D1 of the first flange 1 is parallel to the main axis D2 of the second flange 2. The main axis D3 of the web 3 is perpendicular to the axis D1 of the first flange 1 and to the axis D2 of the second flange 2.

The web 3 connects to the first flange 1 by a first flared portion 5-1. The thickness of the first flared portion 5-1 progressively increases between the first portion 5 of the web 3 and the first flange 1. Similarly, the web 3 connects to the second flange 2 by a second flared portion 7-1, whose thickness progressively increases between the second portion 7 of the web 3 and the second flange 2.

The first and second flared portions 5,7 provide areas of high concentration of reinforcing fibers in areas subjected to large stresses when mechanical loads are applied.

According to the illustrated embodiments, an axis D6 passing through a centroid 8 of the second portion 6 and perpendicular to the main extension axis D3 of a cross-section of the web 3 is an axis of symmetry of the cross section of the beam 10.

The beam 10 has thus the same mechanical properties when it used in a given orientation, or turned by 180° relatively to this given orientation.

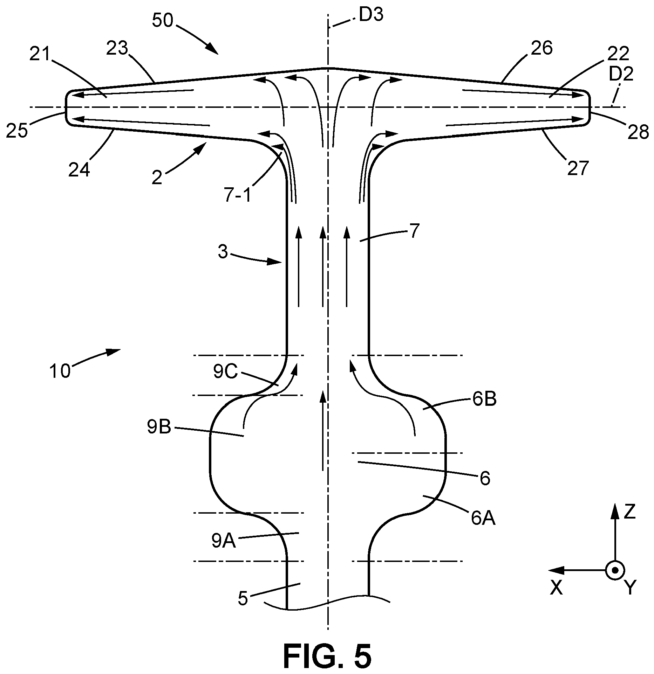

Figure 3 represents an embodiment in which the second portion 6 of the web 3 has a constant thickness T2.
The second portion 6 of the web 3 has thus a rectangular cross section.
In another embodiment, starting from the first portion 5 of the web 3 and moving in direction of the third portion 7 of the web 3, the second portion 6 of the web 3 comprises a first zone 6A of continuously increasing thickness followed by a second zone 6B of continuously decreasing thickness.
This first zone 6A and second zone 6B are more particularly illustrated of figure 5.

A curve of the thickness of the second portion 6 of the web 3 versus the distance from the first flange 1 is continuously increasing in a first stage corresponding to the first zone 6A, then continuously decreasing in a second stage corresponding to the second zone 6B.

The first zone 6A of the second portion 6 of the web 3 separates the first portion 5 of the web 3 from the second zone 6B of the second portion 6 of the web 3. The second zone 6B of the second portion 6 of the web 3 separates the first zone 6A of the second portion 6 of the web 3 from the third portion 7 of the web 3.
The second portion 6 has the shape of a bulge.

Starting from the first portion 5 of the web 3 and moving in direction of the third portion 7 of the web 3, the second portion 6 of the web 3 comprises successively a first concave section 9A, a convex section 9B and a second concave section 9C.

By definition, any segment joining two points from the periphery of a convex section is included in this convex section. Any segment joining two points of the periphery of a concave section is outside of this concave section.

This succession of curved portions provides a high concentration of reinforcing fibers in areas subjected to high stresses when mechanical loads are applied to the beam.

On the illustrated embodiments, the distance between the second portion 6 of the web 3 and the first flange 1 is identical to the distance between the second portion 6 of the web 3 and the second flange 2.

According to a non-represented embodiment of the structural part 50, the second portion 6 of the web 3 is closer to the first flange 1 than to the second flange 2.
In another non-represented variant, the second portion 6 of the web 3 is closer to the second flange 2 than to the first flange 1.

A ratio of the cross-section area S6 of the second portion 6 of the web 3 over the total cross-section area S3 of the web 3 is comprised between 0,25 and 0,5.

As illustrated on part B of figure 6, the total cross-section area S3 of the web 3 is the sum of the cross-section area S5 of the first portion 5, of the cross-section area S6 of the second portion 6, and of the cross-section S7 of the third portion 7 of the web 3.
A ratio of the extension length L6 of the second portion 6 of the web 3 over the total extension length L3 of the web 3 is comprised between 0,2 and 0,35.

The total extension length L3 of the web 3 is the sum of the extension length L5 of the first portion 5, of the extension length L6 of the second portion 6, and of the extension length L7 of the third portion 7 of the web 3.
The extension length L6 of the second portion 6 is measured along the main extension axis D3 of the web 3. In the same way, the extension length L5 of the first portion 5 and the extension length L7 of the third portion 7 of the web 3 are measured along the main extension axis D3 of the web 3.
The total extension length L3 of the web 3 may be referred to as the depth of the web 3.

A ratio of the thickness T2 of the second portion 6 of the web 3 over the thickness T1 of the first portion 5 of the web 3 is comprised between 1,2 and 2,5.

When the second portion has a bulged shape and its thickness is not constant, the thickness T2 is defined as the maximum thickness of the second portion, ie the thickness of the thickest location.

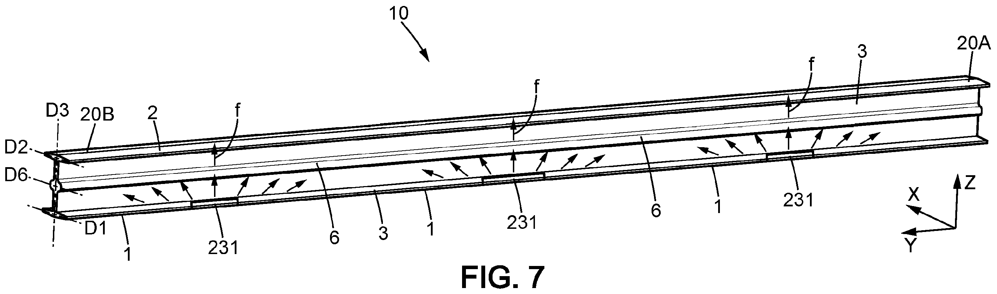

Figure 7 represents a perspective view of the beam 10. The cross section of the beam 10 is constant along the length of the beam 10.
On figure 7, the vertical axis Z coincides with the axis D3 of a cross-section of the web 3. The longitudinal axis X coincides with the axis D1, D2 of a cross-section of the first flange 1 and second flange 2. The transversal axis Y is the main extension axis of the beam 10. The axis X, Y, Z are perpendicular to each other two by two.

The material of the beam 10 comprises a mix of reinforcing glass fibers with thermoplastic material.

For example, the material of the beam 10 comprises a mix of reinforcing glass fibers with polyamide plastic material.
The polyamide material is for example PA6. (for "polycaprolactam")
This material combines good mechanical properties with reasonable cost.

The reinforcing fibers are for example glass fibers.
A weight ratio of reinforcing glass fibers is comprised between 15% and 40%. This range of fibers concentration provides high mechanical properties.

A method for manufacturing a structural part 50 as described earlier will now be described. The method comprises the steps:
(i) supplying a two-part mold 210, 220, comprising a set of injection points 230 offset along a main extension axis D1 of the beam 10,
   the injection points 230 facing a first flange 1 of the beam 10,
(ii) injecting a mix of molten plastic and reinforcing fibers so as to form the beam 10.

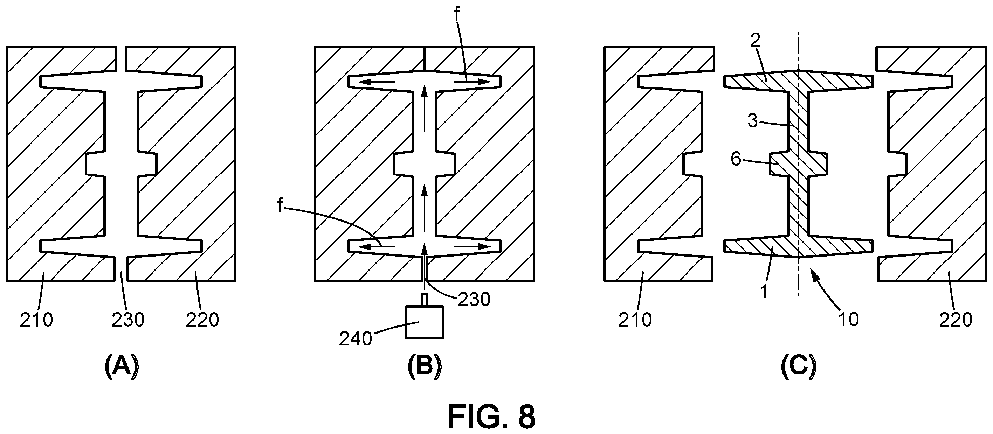

On part A of figure 8, the two parts 210, 220 of the mold are separated from each other.
On part B of figure 8, the two parts 20, 220 of the mold are joined and clamped together, defining a cavity in which a mix of molten plastic and reinforcing fibers can be injected by an injection device 240. On part C, the molten mix has been put in shape and has cooled down. The mold is opened so that the injected beam 10 can be retrieved. The process can then be iterated to generate another part.

On figures 7,8 and 9, the arrows f schematically illustrate the flow of molten plastic and fibers.
On the embodiment illustrated on figure 8, the molten plastic is injected in a direction parallel to the extension axis D3 of a cross-section of the web 3 of the beam 10.
On figure 7, the signs 231 correspond to areas of the beam that are facing injection points. A different number of injection points may be used.

The molten plastic, containing reinforcement fibers, flows into the mold and fills the cavity of the mold. The plastic flows from an injection point 230 located on a first flange 1, and progresses towards the enlarged area 6, then towards the second flange 2.

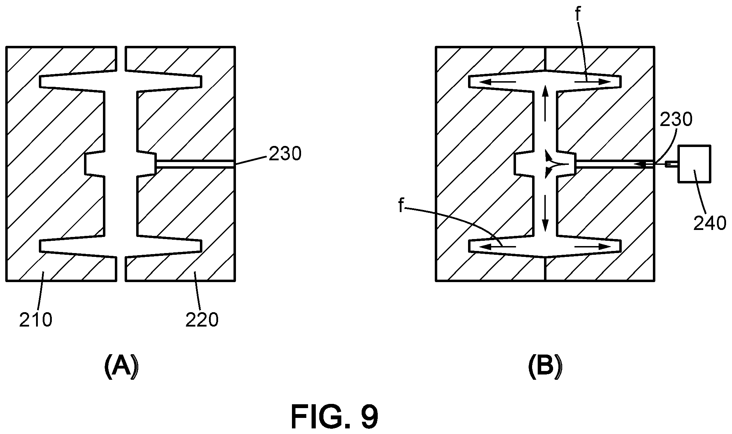

The injection point can also be disposed differently respectively to the mold. On the embodiment illustrated on figure 9, the injection point is disposed on a side of the second part 220 of the mold. The mix of molten plastic and reinforcement fibers is injected in a direction transverse of the extension axis D3 of a cross-section of the web 3 of the beam 10. With this injection set-up, the filling of the mold may be easier, particularly in the direction transverse to D3. The end portions 15, 18 of the first flange 1 and the end portions 25, 28 of the second flange 2 may receive a more uniform flow of molten material.
The exact number of injection points and their exact location are adapted to the dimensions of the beam to be obtained and to the selected material.

The enlarged portion 6 of the web 3 makes the flow of molten plastic easier, and the mold cavities can be fully filled. Defaults usually associated with difficulties in properly filling the mold, such as short fill or flows lines, are avoided. The selected injection direction, together with the shape of the enlarged portion 6 of the web 3 makes the manufacturing of plastic structural parts possible. The parts obtained with this method may be cheaper and lighter than the counterparts in metal.

## Claims

1. A structural part (50) for a truck (100), comprising :
a beam (10) made of fiber-reinforced plastic, the beam (10) having a I-shaped cross-section, the beam (10) comprising a web (3) extending from a first flange (1) to a second flange (2), in which
a cross-section of the web (3) comprises :
a first portion (5) with a first thickness (T1),
a second portion (6) with a second thickness (T2), the second thickness (T2) being larger than the first thickness (T1), and
a third portion (7) with a third thickness (T3), the third thickness (T3) being smaller than the second thickness (T2),
and in which the second portion (6) is located between the first portion (5) and the third portion (7),
**characterized in that**, starting from the first portion (5) of the web (3) and moving in direction of the third portion (7) of the web (3), the second portion (6) of the web (3) comprises successively a first concave section (9A), a convex section (9B) and a second concave section (9C).

2. A structural part (50) according to claim 1, in which a cross-section of the web (3) extends along a main extension axis (D3) transverse to the first flange (1) and to the second flange (2), in which a cross-section of the first flange (1) comprises a first portion (11) and a second portion (12) extending symmetrically relatively to the main extension axis (D3) of the web (3), and in which each portion (11,12) of the first flange (1) has a thickness decreasing continuously from the main extension axis (D3) of the web (3) to a free end (15, 18) of each portion (11, 12) of the first flange (1).

3. A structural part (50) according to claim 2, in which :
- the first portion (11) of the first flange (1) comprises a first side (13) orientated away from the web (3) and a second side (14) orientated towards the web (3),
- the second portion (12) of the first flange (1) comprises a first side (16) orientated away from the web (3) and a second side (17) orientated towards the web (3), and
the first side (13) of the first portion (11) of the first flange (1) makes with the first side (16) of the second portion (12) of the first flange (1) an angle (a1) comprised between 166° and 176°.

4. A structural part (50) according to any of the preceding claims, in which the thickness (T1) of the first portion (5) of the web (3) is identical to the thickness (T3) of the third portion (7) of the web (3).

5. A structural part (50) according to any of claims 1 to 4, in which the second portion (6) of the web (3) has a constant thickness.

6. A structural part (50) according to any of claims 1 to 4 in which, starting from the first portion (5) of the web (3) and moving in direction of the third portion (7) of the web (3), the second portion (6) of the web (3) comprises a first zone (6A) of continuously increasing thickness followed by a second zone (6B) of continuously decreasing thickness.

7. A structural part (50) according to any of the preceding claims, in which the second portion (6) of the web (3) is closer to the first flange (1) than to the second flange (2).

8. A structural part (50) according to any of the preceding claims, in which a ratio of the cross-section area (S6) of the second portion (6) of the web (3) over the total cross-section area (S3) of the web (3) is comprised between 0,25 and 0,5.

9. A structural part (50) according to any of the preceding claims, in which a ratio of the extension length (L6) of the second portion (6) of the web (3) over the total extension length (L3) of the web (3) is comprised between 0,2 and 0,35.

10. A structural part (50) according to any of the preceding claims, in which a ratio of the thickness (T2) of the second portion (6) of the web (3) over the thickness (T1) of the first portion (5) of the web (3) is comprised between 1,2 and 2,5.

11. A structural part (50) according to the preceding claims, in which the material of the beam (10) comprises a mix of reinforcing glass fibers with polyamide plastic material.

12. A method for manufacturing a structural part (50) according to one of the preceding claims, comprising the steps :
(i) supplying a two-part mold (210, 220), comprising a set of injection points (230) offset along a main extension axis (D1) of the beam (10),
the injection points (230) facing a first flange (1) of the beam (10),
(ii) injecting a mix of molten plastic and reinforcing fibers so as to form the beam (10).

13. A truck grille (60) comprising:
- a structural part (50) according to any of claims 1 to 11,
- a cover (55) attached to the structural part (50),
- two support arms (56, 57) extending transversely to the beam (10),
in which the support arms (56, 57) are configured to be pivotably fixed to a cabin (80) of a truck (100).

14. A truck (100) comprising a truck grille (60) according to the preceding claim, in which the truck grille (60) can be pivoted between :
- a first position (P1) in which the truck grille (60) is flush with a front surface (75) of a truck cabin (80),
- a second position (P2) in which the truck grille (60) protrudes out of the front surface (75) of the truck cabin (80), so that the grille (50) forms a step member for climbing along the cabin (80) of the truck (100).

## Patentansprüche

1. Strukturteil (50) für einen Lastkraftwagen (100), umfassend:
einen Träger (10), gefertigt aus faserverstärktem Kunststoff, wobei der Träger (10) einen I-förmigen Querschnitt aufweist, der Träger (10) umfassend einen Steg (3), der sich von einem ersten Flansch (1) zu einem zweiten Flansch (2) erstreckt, wobei ein Querschnitt des Stegs (3) Folgendes umfasst:
einen ersten Abschnitt (5) mit einer ersten Stärke (T1),
einen zweiten Abschnitt (6) mit einer zweiten Stärke (T2), wobei die zweite Stärke (T2) größer ist als die erste Stärke (T1), und
einen dritten Abschnitt (7) mit einer dritten Stärke (T3), wobei die dritte Stärke (T3) kleiner ist als die zweite Stärke (T2),
und wobei sich der zweite Abschnitt (6) zwischen dem ersten Abschnitt (5) und dem dritten Abschnitt (7) befindet,
**dadurch gekennzeichnet, dass**
ausgehend von dem ersten Abschnitt (5) des Stegs (3) und in Richtung des dritten Abschnitts (7) des Stegs (3), der zweite Abschnitt (6) des Stegs (3) nacheinander einen ersten konkaven Abschnitt (9A), einen konvexen Abschnitt (9B) und einen zweiten konkaven Abschnitt (9C) umfasst.

2. Strukturteil (50) nach Anspruch 1, wobei sich ein Querschnitt des Stegs (3) entlang einer Haupterstreckungsachse (D3) quer zu dem ersten Flansch (1) und zu dem zweiten Flansch (2) erstreckt, wobei ein Querschnitt des ersten Flanschs (1) einen ersten Abschnitt (11) und einen zweiten Abschnitt (12) umfasst, die symmetrisch in Bezug auf die Haupterstreckungsachse (D3) des Stegs (3) sind, und
wobei jeder Abschnitt (11, 12) des ersten Flanschs (1) eine von der Haupterstreckungsachse (D3) des Stegs (3) zu einem freien Ende (15, 18) von jedem Abschnitt (11, 12) des ersten Flanschs (1) kontinuierlich abnehmende Stärke aufweist.

3. Strukturteil (50) nach Anspruch 2, wobei:
- der erste Abschnitt (11) des ersten Flanschs (1) eine erste, von dem Steg (3) weg ausgerichtete Seite (13) und eine zweite, zu dem Steg (3) hin ausgerichtete Seite (14) umfasst,
- der zweite Abschnitt (12) des ersten Flanschs (1) eine erste Seite (16) umfasst, die von dem Steg (3) weg ausgerichtet ist, und eine zweite Seite (17), die zu dem Steg (3) hin ausgerichtet ist, und
die erste Seite (13) des ersten Abschnitts (11) des ersten Flanschs (1) mit der ersten Seite (16) des zweiten Abschnitts (12) des ersten Flanschs (1) einen Winkel (a1) bildet, der zwischen 166° und 176° liegt.

4. Strukturteil (50) nach einem der vorherigen Ansprüche, wobei die Stärke (T1) des ersten Abschnitts (5) des Stegs (3) identisch ist mit der Stärke (T3) des dritten Abschnitts (7) des Stegs (3).

5. Strukturteil (50) nach einem der Ansprüche 1 bis 4, wobei der zweite Abschnitt (6) des Stegs (3) eine konstante Stärke aufweist.

6. Strukturteil (50) nach einem der Ansprüche 1 bis 4, wobei ausgehend von dem ersten Abschnitt (5) des Stegs (3) und in Richtung des dritten Abschnitts (7) des Stegs (3) der zweite Abschnitt (6) des Stegs (3) eine erste Zone (6A) mit kontinuierlich zunehmender Stärke, gefolgt von einer zweiten Zone (6B) mit kontinuierlich abnehmender Stärke, umfasst.

7. Strukturteil (50) nach einem der vorherigen Ansprüche, wobei der zweite Abschnitt (6) des Stegs (3) näher an dem ersten Flansch (1) ist als am zweiten Flansch (2).

8. Strukturteil (50) nach einem der vorherigen Ansprüche, wobei ein Verhältnis der Querschnittsfläche (S6) des zweiten Abschnitts (6) des Stegs (3) zu der Gesamtquerschnittsfläche (S3) des Stegs (3) zwischen 0,25 und 0,5 liegt.

9. Strukturteil (50) nach einem der vorherigen Ansprüche, wobei das Verhältnis der Erstreckungslänge (L6) des zweiten Abschnitts (6) des Stegs (3) zu der Gesamterstreckungslänge (L3) des Stegs (3) zwischen 0,2 und 0,35 liegt.

10. Strukturteil (50) nach einem der vorherigen Ansprüche, wobei das Verhältnis der Stärke (T2) des zweiten Abschnitts (6) des Stegs (3) zu der Stärke (T1) des ersten Abschnitts (5) des Stegs (3) zwischen 1,2 und 2,5 liegt.

11. Strukturteil (50) nach einem der vorherigen Ansprüche, wobei das Material des Trägers (10) ein Gemisch aus verstärkenden Glasfasern und Polyamidkunststoff umfasst.

12. Verfahren zum Herstellen eines Strukturteils (50) nach einem der vorherigen Ansprüche, umfassend die folgenden Schritte:
(i) Bereitstellen einer zweiteiligen Form (210, 220), umfassend einen Satz von Einspritzpunkten (230), die entlang einer Haupterstreckungsachse (D1) des Trägers (10) versetzt sind, wobei die Einspritzpunkte (230) einem ersten Flansch (1) des Trägers (10) zugewandt sind,
(ii) Einspritzen eines Gemischs aus geschmolzenem Kunststoff und Verstärkungsfasern, um den Träger (10) zu bilden.

13. Lastkraftwagenkühlergrill (60), umfassend:
- ein Strukturteil (50) nach einem der Ansprüche 1 bis 11,
- eine Abdeckung (55), die an dem Strukturteil (50) angebracht ist,
- zwei Tragarme (56, 57), die sich quer zu dem Träger (10) erstrecken,
wobei die Tragarme (56, 57) konfiguriert sind, um schwenkbar an einer Kabine (80) eines Lastkraftwagens (100) befestigt zu sein.

14. Lastkraftwagen (100), umfassend einen Lastkraftwagenkühlergrill (60) nach dem vorherigen Anspruch, wobei der Lastkraftwagenkühlergrill (60) schwenkbar ist zwischen:
- einer ersten Position (P1), in der der Lastkraftwagenkühlergrill (60) mit einer Frontfläche (75) einer Lastkraftwagenkabine (80) bündig ist,
- einer zweiten Position (P2), in der der Lastkraftwagenkühlergrill (60) aus der Frontfläche (75) der Lastkraftwagenkabine (80) hervorsteht, sodass der Kühlergrill (50) ein Stufenelement zum Steigen entlang der Kabine (80) des Lastkraftwagens (100) bildet.

## Revendications

1. Pièce de structure (50) pour un camion (100), comprenant :
une poutre (10) en plastique renforcé de fibres, la poutre (10) ayant une section transversale en forme de I, la poutre (10) comprenant une âme (3) s'étendant d'une première bride (1) à une seconde bride (2), dans laquelle
une section transversale de l'âme (3) comprend :
une première partie (5) d'une première épaisseur (T1),
une deuxième partie (6) d'une deuxième épaisseur (T2), la deuxième épaisseur (T2) étant plus grande que la première épaisseur (T1), et
une troisième partie (7) d'une troisième épaisseur (T3), la troisième épaisseur (T3) étant plus petite que la deuxième épaisseur (T2),
et dans laquelle la deuxième partie (6) est située entre la première partie (5) et la troisième partie (7),
**caractérisée en ce que**,
à partir de la première partie (5) de l'âme (3) et en direction de la troisième partie (7) de l'âme (3), la deuxième partie (6) de l'âme (3) comprend successivement une première section concave (9A), une section convexe (9B) et une seconde section concave (9C).

2. Pièce de structure (50) selon la revendication 1, dans laquelle une section transversale de l'âme (3) s'étend le long d'un axe d'extension principal (D3) transversal à la première bride (1) et à la seconde bride (2), dans laquelle une section transversale de la première bride (1) comprend une première partie (11) et une seconde partie (12) s'étendant symétriquement par rapport à l'axe d'extension principal (D3) de l'âme (3), et
dans laquelle chaque partie (11, 12) de la première bride (1) a une épaisseur diminuant en continu depuis l'axe d'extension principal (D3) de l'âme (3) jusqu'à une extrémité libre (15, 18) de chaque partie (11, 12) de la première bride (1).

3. Pièce de structure (50) selon la revendication 2, dans laquelle :
- la première partie (11) de la première bride (1) comprend un premier côté (13) orienté à l'opposé de l'âme (3) et un second côté (14) orienté vers l'âme (3),
- la seconde partie (12) de la première bride (1) comprend un premier côté (16) orienté à l'opposé de l'âme (3) et un second côté (17) orienté vers l'âme (3), et
le premier côté (13) de la première partie (11) de la première bride (1) forme avec le premier côté (16) de la seconde partie (12) de la première bride (1) un angle (a1) compris entre 166° et 176°.

4. Pièce de structure (50) selon l'une quelconque des revendications précédentes, dans laquelle l'épaisseur (T1) de la première partie (5) de l'âme (3) est identique à l'épaisseur (T3) de la troisième partie (7) de l'âme (3).

5. Pièce de structure (50) selon l'une quelconque des revendications 1 à 4, dans laquelle la deuxième partie (6) de l'âme (3) a une épaisseur constante.

6. Pièce de structure (50) selon l'une quelconque des revendications 1 à 4 dans laquelle, à partir de la première partie (5) de l'âme (3) et en direction de la troisième partie (7) de l'âme (3), la deuxième partie (6) de l'âme (3) comprend une première zone (6A) d'une épaisseur augmentant en continu suivie d'une seconde zone (6B) d'une épaisseur diminuant en continu.

7. Pièce de structure (50) selon l'une quelconque des revendications précédentes, dans laquelle la deuxième partie (6) de l'âme (3) est plus proche de la première bride (1) que de la seconde bride (2).

8. Pièce de structure (50) selon l'une quelconque des revendications précédentes, dans laquelle un rapport de la section transversale (S6) de la deuxième partie (6) de l'âme (3) sur la section transversale totale (S3) de l'âme (3) est compris entre 0,25 et 0,5.

9. Pièce de structure (50) selon l'une quelconque des revendications précédentes, dans laquelle un rapport de la longueur d'extension (L6) de la deuxième partie (6) de l'âme (3) sur la longueur d'extension totale (L3) de l'âme (3) est compris entre 0,2 et 0,35.

10. Pièce de structure (50) selon l'une quelconque des revendications précédentes, dans laquelle un rapport de l'épaisseur (T2) de la deuxième partie (6) de l'âme (3) sur l'épaisseur (T1) de la première partie (5) de l'âme (3) est compris entre 1,2 et 2,5.

11. Pièce de structure (50) selon les revendications précédentes, dans laquelle le matériau de la poutre (10) comprend un mélange de fibres de verre de renforcement et de matière plastique polyamide.

12. Procédé de fabrication d'une pièce de structure (50) selon l'une des revendications précédentes, comprenant les étapes de :
(i) fourniture d'un moule en deux parties (210, 220), comprenant un ensemble de points d'injection (230) décalés le long d'un axe d'extension principal (D1) de la poutre (10), les points d'injection (230) faisant face à une première bride (1) de la poutre (10),
(ii) injection d'un mélange de plastique fondu et de fibres de renforcement de manière à former la poutre (10).

13. Calandre de camion (60) comprenant :
- une pièce de structure (50) selon l'une quelconque des revendications 1 à 11,
- un couvercle (55) fixé à la partie de structure (50),
- deux bras de support (56, 57) s'étendant transversalement à la poutre (10),
dans laquelle les bras de support (56, 57) sont configurés pour être fixés de manière pivotante à une cabine (80) d'un camion (100).

14. Camion (100) comprenant une calandre de camion (60) selon la revendication précédente, dans laquelle la calandre de camion (60) peut être pivotée entre :
- une première position (P1) dans laquelle la calandre de camion (60) est alignée avec une surface avant (75) d'une cabine de camion (80),
- une seconde position (P2) dans laquelle la calandre de camion (60) dépasse de la surface avant (75) de la cabine de camion (80), de sorte que la calandre (50) forme un marchepied pour monter le long de la cabine (80) du camion (100).
